(19) Europäisches Patentamt
European Patent Office
Office européen des brevets

(11) **EP 2 166 761 A1**

(12) **EUROPEAN PATENT APPLICATION**

(43) Date of publication:
**24.03.2010 Bulletin 2010/12**

(51) Int Cl.:
***H04N 7/16*** *(2006.01)*

(21) Application number: **08164674.7**

(22) Date of filing: **19.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nagravision S.A.**
**1033 Cheseaux-sur-Lausanne (CH)**

(72) Inventors:
• **JUNOD, Pascal**
**1302, Vufflens-la-Ville (CH)**
• **KARLOV, Alexandre**
**1217, Meyrin (CH)**

(74) Representative: **Leman Consulting S.A.**
**Chemin de Précossy 31**
**1260 Nyon (CH)**

(54) **Method to enforce by a management center the access rules to a broadcast product**

(57) The purpose of this invention is to propose a manner to rely to a lesser extent on the security means of the receiver's security module to enforce the access conditions defined in the key messages on one hand and to handle complex access conditions based on the characteristic and properties of the receiving device or the user of such a device on the other hand.

It is therefore proposed a method to enforce by a management center the access rules to a broadcast product received by receivers, the access to said product being released by an access key, said management center managing a plurality of Boolean positive and negative attributes on receivers, the method comprising the steps of associating one positive Boolean attribute to one receiver entitled to said attribute and loading sate to it; associating one negative Boolean attribute to said receiver not entitled to said attribute and loading sate to it; defining at least a second broadcast encryption scheme targeting the set of the negative Boolean attributes and associating to each negative Boolean attribute the corresponding decryption key material; expressing the access conditions on a product as a Boolean expression on attributes by combining at least one of the positive Boolean attributes and at least one of the negative Boolean attributes by means of at least one of Boolean conjunction or disjunction; generating at least one cryptogram to be broadcasted to the receiver by encrypting the access key by means of the two combined broadcast encryption schemes according to the said Boolean expression.

$$CY = [K]_{K1', K2}$$

**Fig. 1**

## Description

### Field of the invention

This invention refers to the field of broadcast encryption, in particular the way to manage authorization rights in a broadcast system having a management center and a plurality of receiving devices.

### Introduction

In the known standard pay-TV broadcast model, as disclosed in the "EBU Functional Model of a Conditional Access System", EBU technical review, winter 1995, the pay-TV product to be broadcast is encrypted and the keys to decrypt the pay-TV product on the receiving side are placed in Entitlement Control Messages (ECM) sent together with the scrambled pay-TV product. The ECMs are encrypted with a transmission key, which is changed frequently for security reasons.

In addition to the descrambling keys, the ECM carries information on the pay-TV product conditional access rights in the form of access conditions to be enforced on the receiving side.

The individual subscriber conditional access rights (for instance a service subscription right for one month) as well as the transmission keys, are managed and transmitted on an asynchronous way in the form of Entitlement Management Messages (EMM). The EMMs are encrypted with secret keys only known to the receivers.

For a receiving device to be able to receive and decrypt a product, the first step is therefore to receive and decrypt the EMM messages carrying the rights corresponding to the product as well as the EMM messages carrying the transmission keys necessary to decrypt the ECM messages. For that purpose, the receiving device comprises a unique key and the EMM is encrypted by the matching unique key of the receiving device and broadcast so that only this particular device can decrypt the EMM. For that purpose, symmetric or asymmetric keys can be used.

### Prior art

Different rights can be loaded into the security means memory of the receiving device, this security means being generally in the form of a smart card, and are then enforced by said security means.

These security means can have different forms, such as smartcard, secure chip, USB dongle or tamper-resistant software in the device.

We consider these security means as secure enough to store at least the transmission key, the unique key pertaining to this receiving device and the right (or rights) associated with this receiving device.

The role of the security means is to receive the ECM and EMM messages, decrypt the ECM using the transmission key and extract the access key (or keys) as well as the access conditions related to this pay-TV product. The security means check if the right matching the access conditions contained in the ECM is present in security means memory and in the positive event, the access key is returned to the receiving device for decrypting the product.

An ECM can contain more that one access condition definition. In this case, according to the policy applied, the security means can check the presence of the rights in its memory and return the access key if at least one of the rights is present (Boolean OR function). According to another policy, the security means can return the access key only if all the rights matching the whole set of access conditions are present in the security means memory (Boolean AND function).

Complex queries on the memory content can be executed as disclosed in WO2004052005. The access key is returned to the receiving device only if the various tests give a positive result. Not only rights per se are taken into account but expiration date or credit status can be used in the entitlement validity decision.

The rights as well as the transmission key can be loaded through EMM messages into the security means memory according to various ways:

- At the initialization phase of the receiving device, via a local connection with host device or via the reception of initialization messages sent on the broadcast channel

- At any time e.g. when the subscriber's data are modified, subscription or cancellation of services, renew of the rights, modification of the services key (including the transmission key).

With the advert of security means made only by software, the risk that this software is compromised is higher than with specific hardware security means.

Broadcast encryption primitives such as the one disclosed in "Collusion Resistant Broadcast Encryption with Short Ciphertexts and Private Keys" by Dan Boneh, Craig Gentry and Brent Waters are an efficient way to securely transmit digital content via a broadcast channel with respect to channel bandwidth, receiver's storage capacity and encryption/decryption complexity. It consists of three algorithms. Setup algorithm, which initializes the system parameters such as decryption key material for the receivers (targets) and an encryption key for the broadcast center. Encrypt algorithm generates a cryptogram for an authorized subset of receivers, so that other receivers outside the authorized subset are unable to decrypt the cryptogram. Decrypt algorithm correctly decrypts the cryptogram provided that the receiver has the decryption key and is in the authorized subset.

**Problem to be solved**

Consider a situation where the center wishes to broadcast premium content to the authorized set of receivers which fulfill a certain criteria or characteristic (or lack thereof). This characteristic might be for instance the subscription to a package of services, the amount of money remaining on the smart card, the ZIP code of the receiver (or other geographic information), chipset properties or any other customer- or device-related information.

The benefit of the present invention is to efficiently address this issue by using two instances of broadcast encryption primitives in parallel.

Contrary to the method disclosed in WO2004052005 which has a comparative functionality, the present invention allows performing right enforcement at the broadcast center (i.e. head-end). This has an advantage over the previous method which enforces rights in the security module (SC) since the security in the former case is based on the difficulty to reverse-engineer (break) a security module, while in our case the security is based on a hard mathematical problem. Also, contrary to the disclosure in WO2004052005 the present invention can handle complex access conditions and policies without any impact for the security of the system.

**Brief description of the invention**

The purpose of this invention is to propose a manner to rely to a lesser extent on the security means of the receiver's security module (SC) to enforce the access conditions defined in the key messages on one hand and to handle complex access conditions based on the characteristic and properties of the receiving device or the user of such a device on the other hand.

It is therefore proposed a method to enforce by a management center the access rules to a broadcast product received by receivers, the access to said product being released by an access key, said management center managing a plurality of Boolean positive and negative attributes on receivers, the method comprising the steps of:

a. associating at least one positive Boolean attribute to at least one receiver entitled to said attribute;

b. associating at least one negative Boolean attribute to said receiver not entitled to said attribute;

c. defining at least one broadcast encryption scheme targeting a set of positive Boolean attributes and associating to each attribute the corresponding decryption key material;

d. defining at least a second broadcast encryption scheme targeting the set of the negative Boolean attributes and associating to each negative Boolean attribute the corresponding decryption key material;

e. loading in each receiver the broadcast encryption key material corresponding to both its associated positive Boolean attributes and negative Boolean attributes;

f. expressing the access conditions on a product as a Boolean expression on attributes by combining at least one of the positive Boolean attributes and at least one of the negative Boolean attributes by means of at least one of Boolean conjunction or disjunction;

g. generating at least one cryptogram to be broadcasted to the receiver by encrypting the access key by means of the two combined broadcast encryption schemes according to the said Boolean expression.

A Boolean attribute can represent a broadcast service, a set of broadcast services, a location indication, a level of electronic purse, a technical characteristic (software version, hardware version of the receiving device), or any other device- or customer-related information.

The management center first targets an attribute (e.g. set of services) and list the possible attributes and for each attribute, key material is determined. By key material, it is meant at least a key associated with this attribute and optionally a right definition.

For a particular attribute, the management center defines positive and negative key materials. The positive material is the material related to the presence of this attribute in a receiving device and the negative material is the material related to the absence of this attribute in a receiving device.

This invention is based on the fact that for a particular receiving device being entitled to a first Boolean attribute and not to a second Boolean attribute, said receiving device receives the positive key material of the fist attribute and the negative material of the second attribute.

Thanks to this key material, the key messages can carry complex queries such as allowing access to the access key only if the receiving device is entitled of the first attribute and not entitled to the second attribute.

The access key can be used to directly access the product or indirectly access the product, i.e. by using further keys or algorithms in the security module. This access key can be combined with other keys in the same message or in other entitlement control messages such as described in EP1252768, the access key playing the role in this case of a master key.

In an alternate embodiment, the access key is the so-called transmission key that is used to encrypt (or decrypt) the messages containing the control words and the access conditions.

**Brief description of the drawing**

The invention will be explained with the help of the attached figure in which a general sketch of the broadcast environment is illustrated.

**Detailed description of the invention**

As already been said the main idea of the invention is to use two instances of broadcast encryption scheme in parallel in order to handle general Boolean access policies.

Examples of such policies (or queries) may include, but are not limited to:

- $(A_1 \vee A_2) \wedge \neg A_3$: provide access to content to users who have a subscription to packages P1 ($A_1$) or P2 ($A_2$) and who are not living in Urville ($\neg A_3$).

- $A_1 \wedge A_2$: provide access to content to users in the New York area ($A_1$) who are spending more than 60 dollars for their subscription ($A_2$).

- $(A_1 \wedge A_2) \vee (B_1 \wedge \neg B_2)$: provide access to content only to Set-top boxes from manufacturer B having firmware revision 1.15 ($A_1$) and implementing a strong pairing with the SC ($A_2$), or to those subscribers who have their birthday today ($B_1$) and who do not have delays in paying their bills ($B_2$).

The access policy can be expressed either in Conjunctive Normal Form (CNF) or in the Disjunctive Normal Form. In CNF the Boolean formula is expressed as a conjunction of clauses, where each clause is a disjunction of literals. In DNF it is expressed as a disjunction of clauses, where each clause is a conjunction of literals. Any Boolean expression can be converted into an equivalent CNF or DNF form, so these two forms are considered to be the general representation of Boolean expressions. We always will assume that the expression is either in CNF or DNF form and specify whenever one or another applies.

Typically the premium content, such as video, audio or data will be encrypted using a symmetric key (it will be called the access key $K$), which will be securely transmitted to the authorized set using a broadcast encryption primitive. Obviously a broadcast encryption primitive has the ability to disjunctively target a subset $S \subseteq U$ of authorized users, where $U$ is the set of all users in the system. For example, the center can cryptographically broadcast a message so that only user $i_1$, $i_2$ or $i_3$ are able to decrypt it. This condition can be written as a simple Boolean expression $u_{i_1} \vee u_{i_2} \vee u_{i_3}$. By replacing the targeted set of users with attributes and distributing to each user who has a given attribute $A_i$ the key associated to $A_i$ we obtain a simple attribute based broadcast encryption system which can only deal with disjunction of attributes, i.e. handle access policies like $A_{i_1} \vee A_{i_2} \vee ... \vee A_{i_n}$. Denote by $D$ and $\tilde{D}$ the subsets of attributes and their complements respectively. The complements (or the negated attributes) are the attributes among the set of all attributes and which are not part of $D$. We denote by $BES^{D}_{(1,2)}$ (...) an encrypted broadcast targeted towards a subset of attributes $D$ and by $BES^{\tilde{D}}_{(1,2)}$ (...) an encrypted broadcast targeted towards a subset of complements of attributes.

Let BES$_1$ and BES$_2$ be the two BE schemes (or two independently-keyed instances of one scheme) used in parallel. The BES$_1$ primitive would target a disjunction of attributes (also called positive Boolean attributes), i.e.

$$A_{i_1} \vee A_{i_2} \vee \ldots \vee A_{i_n}$$

BES$_2$ would target a disjunction of attribute's complements (also referenced as negative or negated Boolean attributes), i.e.

$$\overline{A}_{i_1} \vee \overline{A}_{i_2} \vee \ldots \vee \overline{A}_{i_n}$$

This is the basic block for handling complex Boolean expression either in CNF or in DNF. We are now going to describe in details how to handle such expressions using the new framework. There are two cases to consider:

- The expression in CNF

$$\beta_1 \wedge \beta_2 \wedge \ldots \wedge \beta_N$$

where the clause $\beta_i$ is a disjunction of attributes and their complements, i.e.

$$\beta_i = \underbrace{A_{i_1} \vee A_{i_2} \vee \ldots \vee A_{i_n}}_{BES_1} \vee \underbrace{\overline{A}_{i_{n+1}} \vee \overline{A}_{i_{n+2}} \vee \ldots \vee \overline{A}_{i_{n+c}}}_{BES_2}$$

Each clause can be targeted by a BE primitive, since it contains only disjunctions. Each broadcast to a clause would result in two cryptograms: Hdr$_i$ for the subset of positive attributes and Hdr'$_i$ for the subset of negated attributes. The size and the format of the header depend on the underlying broadcast encryption scheme. The cryptogram for the clause $\beta_i$ will be

$$(Hdr_i, Hdr'_i) = \left( BES_1^{D_i}(SK_i), BES_2^{\tilde{D}_i}(SK_i) \right)$$

Each such cryptogram transports a session subkey SK$_i$. The access key K is then the combination of all N session subkeys. The subkeys can be combined by either sequentially encrypting the access key K with every subkey SK$_i$ in some order or by combining, e.g. applying a hash function on all the subkey material and encrypting the access key K with the resulting digest. The global header will be

$$Hdr = \left( (Hdr_1, Hdr'_1), (Hdr_2, Hdr'_2), \ldots, (Hdr_N, Hdr'_N) \right)$$

- The expression in DNF

$$\beta_1 \vee \beta_2 \vee \ldots \vee \beta_N$$

where the clause $\beta_i$ is a disjunction of attributes and their complements, i.e.

$$\beta_i = A_{i_1} \wedge A_{i_2} \wedge \ldots \wedge A_{i_n} \wedge \overline{A}_{i_{n+1}} \wedge \overline{A}_{i_{n+2}} \wedge \ldots \wedge \overline{A}_{i_{n+e}}$$

Each clause is a conjunction and only those users who have all of the attributes of the clause will be able to decrypt. Hence for each clause $\beta_i$ the access key K will be encrypted sequentially and targeted towards a single attribute at a time.

$$Hdr_i = BES_{1,2}^{\{A_1\}} \left( BES_{1,2}^{\{A_2\}} (\ldots) \right)$$

The global header will be

$$Hdr = (Hdr_1, Hdr_2, \ldots, Hdr_N)$$

The encryption sequence is described by a mask or a bitmap and transmitted along with the cryptogram.

**Explanation of the figure**

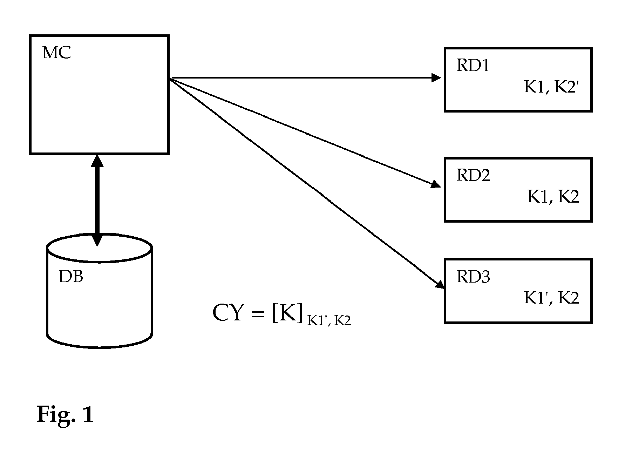

In the figure 1, the management center MC stores in its database DB a copy of the key materials sent in the receiving devices RD1, RD2, RD3. According to our example, two Boolean attributes B1, B2 have been defined, the first one being related to the positive key material K1 and the negative material K1', the second one being related to the positive key material K2 and the negative material K2'.
The receiving device RD1 being entitled to the Boolean attribute B1 has received the key material K1. Due to the fact that this receiving device RD1 is not entitled to the Boolean attribute B2, the key material K2' was also sent to it.
The receiving device RD2 being entitled to the Boolean attribute B1 and B2, both key material K1 and K2 were sent to this device.
The receiving device RD2 being entitled to the Boolean attribute B2, the key material K2 was sent to it. Due to the fact that this receiving device RD3 is not entitled to the Boolean attribute B1, the key material K1' was also sent to it. In case that the management center MC needs to transmit an access key K to only the receiving devices allowed to the second Boolean attribute B2 and not allowed to the first Boolean attribute B1, the cryptogram CY sent to the receiving devices RD will contain the access key combined with the negative key material K1' and the positive key material K2.

**Example of application using the Subset-Cover method**

We will now provide a description of how to use the invention with a specific broadcast encryption scheme, namely the Subset-Cover framework. For a detailed description of the framework and related broadcast encryption schemes see Naor et al., "Revocation and Tracing Schemes for Stateless Receivers", published in Advances in Cryptology - CRYPTO 2001, 21st Annual International Cryptology Conference, pages 41-62, 2001, by Springer-Verlag.
Consider two complete binary trees $T_1$ and $T_2$. The leafs in the tree $T_1$ will be associated with attributes and in $T_2$ the leafs will be associated with their complements. The receiver $u_j$ which has a certain number of attributes will receive key material $L_i$ for each attribute it has. The receiver will also receive the key material $L'_i$ for all attributes that he does not have; that is for all the negated attributes.
If the access condition is in CNF, then for each clause in the Boolean query we will use a different random session subkey $SK_i$, which will be encryption using trees $T_1$ and $T_2$ depending on the type of the clause. The header for the j-th clause will be

$$(Hdr_j, Hdr'_j) = \begin{pmatrix} \left(i_1,\ldots,i_m, E_{L_{i_1}}(SK_j),\ldots,E_{L_{i_m}}(SK_j)\right), \\ \left(i'_1,\ldots,i'_m, E_{L'_{i'_1}}(SK_j),\ldots,E_{L'_{i'_m}}(SK_j)\right) \end{pmatrix}$$

The access key K is composed then from the subkeys as a combination of positive and negative (sub)key material.

$$C = E_{H(SK_1\|SK_2\|\ldots\|SK_N)}(K)$$

where H is a cryptographic one-way function such as SHA-256 for example and E() is a block cipher such as AES for example. Another example of such a combination would be a sequential encryption of the access key K with each subkey.

$$C = E_{H(SK_1)}(E_{H(SK_2)}(\ldots(E_{H(SK_N)}(K))\ldots))$$

The receiver $u_j$ which has one (or several) attribute(s) or its complements from the j-th clause will be able to correctly obtain the subkey $SK_j$, since it will have one of the keys $(L_{i_1},\ldots,L_{i_m},L'_{i'_1},\ldots,L'_{i'_m})$. If the receiver $u_j$ has one (or more) attribute from every clause, i.e. $u_j \in \beta_1 \wedge \beta_2 \wedge \ldots \wedge \beta_n$, then by decrypting every subkey and combining them using the one-way function H, $u_j$ will be able to derive the access key K.

For the DNF type of Boolean query, we have that

$$BES_{CS}^{\{A_{i_1}\}} = \left(i_1, E_{L_{i_1}}(K)\right)$$

meaning that the encryption is done using one key $L_{i_1}$ corresponding to the subset containing one single attribute $A_{i_1}$ with the broadcast targeted towards this sing attribute. By applying the sequential encryption, the cryptogram for the j-th clause in the disjunctive expression will be

$$Hdr_j = \left(i_1,\ldots,i_m, E_{L_{i_1}}\left(E_{L_{i_2}}(\ldots)\right)\right)$$

If the receiver $u_j$ belongs to one of the clauses, i.e. $u_j \in \beta_1 \vee \beta_2 \vee \ldots \vee \beta_n$, then by sequentially decrypting the cryptogram of the clause it belongs to according to the sequence $i_1,\ldots,i_m$, it will obtain the correct value for the access key K.

**Claims**

1. Method to enforce by a management center the access rules to a broadcast product received by receivers, the access to said product being released by an access key, said management center managing a plurality of Boolean positive and negative attributes on receivers, the method comprising the steps of:

   a. associating at least one positive Boolean attribute to at least one receiver entitled to said attribute;
   b. associating at least one negative Boolean attribute to said receiver not entitled to said attribute;
   c. defining at least one broadcast encryption scheme targeting a set of positive Boolean attributes and associating to each attribute the corresponding decryption key material;
   d. defining at least a second broadcast encryption scheme targeting the set of the negative Boolean attributes and associating to each negative Boolean attribute the corresponding decryption key material;

e. loading in each receiver the broadcast encryption key material corresponding to both its associated positive Boolean attributes and negative Boolean attributes;

f. expressing the access conditions on a product as a Boolean expression on attributes by combining at least one of the positive Boolean attributes and at least one of the negative Boolean attributes by means of at least one of Boolean conjunction or disjunction;

g. generating at least one cryptogram to be broadcast to the receiver by encrypting the access key by means of the two combined broadcast encryption schemes according to the said Boolean expression.

2. Method of claim 1, in which the cryptogram is generated by sequentially encrypting the access key by at least one positive key material and at least one negative key material.

3. Method of claim 1, in which the cryptogram is generated by encrypting the access key by a combination of at least one positive key material and at least one negative key material

4. Method of claim 1, in which the cryptogram is generated by sequentially encrypting the access key by at least one negative key material and at least one positive key material.

5. Method of claim 1, in which a first cryptogram is generated by encrypting the access key with at least one positive key material and a second cryptogram is generated by encrypting the access key with at least one negative key material.

6. Method of any of the claims 1 to 5, in which a Boolean attribute represents a broadcast service allowing to access at least one broadcast product, the positive key material is associated with the positive Boolean attribute while the receiver is entitled to said broadcast service and the negative key material is associated with the negative attribute while the receiver is not entitled to said broadcast service.

7. Method of any of the claims 1 to 5, in which a Boolean attribute represents a subscription package allowing to access a plurality of services, the key material being associated with the positive Boolean attribute while the receiver is entitled to said subscription package and the key material being associated with the negative Boolean attribute while the receiver is not entitled to said subscription package.

8. Method of any of the claims 1 to 5, in which a Boolean attribute represents a geographic location of the receiving device allowing to access at least one broadcast product, the key material being associated with the positive Boolean attribute while the receiver is located in said geographic location and the key material being associated with the negative attribute while the receiver is not located in said geographic location.

9. Method of any of the claims 1 to 5, in which a Boolean attribute represents a software or hardware characteristic of the receiving device allowing to access at least one broadcast product, the key material being associated with the positive Boolean attribute while the receiver has the required characteristic and the key material being associated with the negative attribute while the receiver has not the required characteristic.

10. Method of any of the claims 1 to 9 in which the cryptogram comprises identification information describing the Boolean attributes used for the encryption.

11. Method of any of the claims 1 to 10 comprising the steps of:

- defining a second level Boolean attribute comprising a plurality of Boolean attributes, or a logical expression thereof
- allocating to said second level Boolean attribute, second key material,
- defining the access conditions on a product as a Boolean expression on attributes by combining at least one of the positive or negative Boolean attributes and at least one of the negative or positive Boolean attributes of the second level.

MC

DB

RD1

K1, K2'

RD2

K1, K2

RD3

K1', K2

$$CY = [K]_{K1', K2}$$

**Fig. 1**

Europäisches
Patentamt
European
Patent Office
Office européen
des brevets

# EUROPEAN SEARCH REPORT

**Application Number**

EP 08 16 4674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2004/168063 A1 (REVITAL DAN [IL] ET AL REVITAL DAN [IL] ET AL) 26 August 2004 (2004-08-26) * the whole document * ----- | 1-11 | INV. H04N7/16 |
| Y | US 2008/192936 A1 (BELLWOOD THOMAS A [US] ET AL) 14 August 2008 (2008-08-14) * the whole document * ----- | 1-11 | |
| Y | WO 2006/055853 A (GEN INSTRUMENT CORP [US]; MEDVINSKY ALEXANDER [US]) 26 May 2006 (2006-05-26) * the whole document * ----- | 1-11 | |
| Y | US 2008/019517 A1 (MUNGUIA PETER [US] ET AL) 24 January 2008 (2008-01-24) * the whole document * ----- | 1-11 | |
| Y | US 2006/184796 A1 (FAHRNY JAMES W [US]) 17 August 2006 (2006-08-17) * the whole document * ----- | 1-11 | |

**TECHNICAL FIELDS SEARCHED (IPC)**

H04N

The present search report has been drawn up for all claims

| Place of search | Date of completion of the search | Examiner |
|---|---|---|
| Munich | 21 April 2009 | Luckett, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 16 4674

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2009

| Patent document cited in search report | | Publication date | Patent family member(s) | | Publication date |
|---|---|---|---|---|---|
| US 2004168063 | A1 | 26-08-2004 | NONE | | |
| US 2008192936 | A1 | 14-08-2008 | WO | 2008098833 A2 | 21-08-2008 |
| WO 2006055853 | A | 26-05-2006 | CA | 2586172 A1 | 26-05-2006 |
| | | | CN | 101061714 A | 24-10-2007 |
| | | | EP | 1815682 A2 | 08-08-2007 |
| US 2008019517 | A1 | 24-01-2008 | EP | 2002592 A2 | 17-12-2008 |
| | | | KR | 20080100477 A | 18-11-2008 |
| | | | WO | 2008018925 A2 | 14-02-2008 |
| US 2006184796 | A1 | 17-08-2006 | CA | 2602226 A1 | 23-08-2007 |
| | | | EP | 1872511 A2 | 02-01-2008 |
| | | | WO | 2007094751 A2 | 23-08-2007 |

EPO FORM P0459

For more details about this annex : see Official Journal of the European Patent Office, No. 12/82

**REFERENCES CITED IN THE DESCRIPTION**

**Patent documents cited in the description**

- WO 2004052005 A

- EP 1252768 A

**Non-patent literature cited in the description**

- Revocation and Tracing Schemes for Stateless Receivers. **Naor et al.** Advances in Cryptology - CRYPTO 2001, 21st Annual International Cryptology Conference. Springer-Verlag, 2001, 41-62